Europäisches Patentamt

European Patent Office

Office européen des brevets

(11) Veröffentlichungsnummer: **0 022 909**
A1

(12) # EUROPÄISCHE PATENTANMELDUNG

(21) Anmeldenummer: **80102779.8**

(51) Int. Cl.³: **G 03 B 23/16**

(22) Anmeldetag: **20.05.80**

(30) Priorität: **20.07.79 DE 2929328**

(43) Veröffentlichungstag der Anmeldung:
**28.01.81 Patentblatt 81/4**

(84) Benannte Vertragsstaaten:
**AT BE CH FR GB IT LI LU NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Prochnow, Claus**
**Lange Strasse 38**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Überblend-Stehbildwerfer.**

(57) Überblendbildwerfer für Stabmagazine, in denen die Dias zur Hälfte in ungerader und zur anderen Hälfte in gerader Zahlenfolge eingeordnet sind; die beiden Bildwerfer sind gleichachsig und mit den Bildfensterführungen gegeneinander gerichtet neben der seitlichen Magazinführung angeordnet, wobei die Bildfensterführungen und Wechselschieberebenen um die halbe Magazinlänge voneinander entfernt sind; in diesem Zwischenraum befindet sich das bewegliche Spiegelsystem zur abwechselnden Auslenkung des Strahlengangs senkrecht zur Projektorenachse in das gemeinsame Objektiv; das Spiegelsystem ist Bestandteil des gleichfalls in dem Zwischenraum untergebrachten zentralen Getriebeaggregats. Es ergibt sich ein flacher langgestreckter Gesamtaufbau mit einer Gesamtlänge vom Doppelten der Einzelbildwerferlänge, zuzüglich der halben Magazinlänge, bei welchem das Stabmagazin auch in den Endstellungen nicht aus dem Bildwerferumriß heraustritt.

Fig. 2

**0022909**

R O L L E I - W E R K E
Franke & Heidecke
Braunschweig

13.05.1980
A 1162 EU

Überblend-Stehbildwerfer

Die Erfindung betrifft Überblend-Stehbildwerfer für Stabmagazine.

Zur Erzielung einer echten Überblendung müssen zwei Projektionssysteme zu einem Gerät zusammengefaßt werden, die getrieblich so koordiniert werden müssen, daß sich während des Überblendvorgangs die aufeinanderfolgenden Dias zeitweilig gleichzeitig in den Bildfenstern befinden. Beträchtlich erschwert wird die Lösung dieser Aufgabe, wenn der Bildwerfer für ein Magazin ausgelegt werden soll, in dem die Dias in bestimmter fortlaufender Folge eingeordnet sind und nach der Projektion wieder in der gleichen Weise selbsttätig eingeordnet sein müssen.

Aus Gründen der Bequemlichkeit und der Auswechselbarkeit des Magazins und einer möglichst flachen Bauweise bevorzugt man die Anordnung, bei der beide Projektoren auf einer Seite des Magazins liegen, obwohl hier der getriebliche Aufwand besonders hoch ist und für die Relativbewegung zwischen Bildfensterführung und Magazin mehr oder weniger komplizierte Pilgerschrittschaltungen erforderlich werden, mit der Folge eines entsprechend hohen getrieblichen Aufwandes und Raumbedarfs. Um diesen Aufwand zu verringern wurde von Stabmagazinen ausge-

/

gangen, in denen die Dias zur Hälfte in ungerader und zur anderen Hälfte in gerader Zahlenfolge eingeordnet sind, ohne daß damit entscheidende Vereinfachungen erreicht wurden.

Eine gewisse Vereinfachung des Pilgerschrittantriebs ergab sich dadurch, daß das Magazin in zwei Hälften aufgeteilt wurde, die gegeneinander um einen Schaltschritt beweglich waren. Das wurde mit dem Nachteil erkauft, daß das Stabmagazin praktisch in zwei Einzelmagazine aufgeteilt wurde.

Der Erfindung liegt die Aufgabe zugrunde, einen Überblend-Stehbildwerfer für ein ungeteiltes Stabmagazin der genannten Art so aufzubauen, daß er mit einem Minimum an Raumbedarf und getrieblichem Aufwand auskommt, daß er in einem flachen Gehäuse untergebracht werden kann und daß trotz kleiner Gehäuselänge das Magazin im Gehäuse verbleibt, d.h. auch in den Endstellungen nicht aus der Rückseite des Gehäuses oder der Stirnwand heraustritt. Damit ergibt sich die Möglichkeit einer Variante, nämlich mit Abstrahlung des Bildes nach der Kassettenseite, so daß der Projektor gegebenenfalls in einem niedrigen und kurzen Regalfach eingesetzt werden kann, ohne daß er zur Bedienung und zum Magazinwechsel herausgenommen zu werden braucht.

Erfindungsgemäß sind die beiden vollständigen Beleuchtungssysteme und Bildfensterführungen gleichachsig gegeneinandergerichtet, zur Magazinschaltrichtung parallel und mit den Bildfensterführungen um die halbe Magazinlänge voneinander entfernt angeordnet und in diesem Zwischenraum sind der bewegliche Überblendspiegel zur alternierenden Ablenkung der Bildstrahlengänge senkrecht zur Achse der Beleuchtungssysteme in das gemeinsame Objektiv und das gesamte in einem Aggregat zusammengefaßte Schaltgetriebe einschließlich des Überblendspiegelantriebs untergebracht. Vorzugsweise ist das Schaltgetriebe für den Greiferantrieb und den Überblendspiegelantrieb mit dem Überblendspiegel zu einem Aggregat zusammengefaßt. An der Objektivstrahlenaustrittsöffnung des Bildwerfergehäuses kann ein Umlenkspiegel für den Projektionsstrahlengang angebracht sein.
Dieser Spiegel ist vorzugsweise schwenkbar und drehbar am Gehäuse gelagert und gleichzeitig als Verschlußklappe für die
Objektivstrahlenaustrittsöffnung ausgebildet. Der Antrieb
der beiden Wechselgreifer und des Überblendspiegels erfolgt
vorzugsweise durch starr oder gleichlaufend miteinander verbundene Nutkurven, wobei jeder Nutkurve die Steuerung des
vollständigen Bewegungszyklus des zugehörigen Antriebsteils
bei einer vollen Umdrehung zugeordnet ist, wobei die beiden
Greiferantriebskurven um 180° gegeneinander versetzt sind
und die Stillstandszonen der Kurven, nämlich die zur Welle
konzentrischen Kurvenabschnitte sich über etwa eine halbe
Umdrehung erstrecken. Das Kurvenrad des Überblendspiegels
erhält vorzugsweise Nocken, in denen die Mitnehmeransätze
des Magazinantriebsritzels für die Magazinfortschaltung liegen. Die Nutkurven können auf einem gemeinsamen Zahnrad oder
auf gesonderten Zahnrädern angebracht sein. In einer weiteren
Ausführungsform wird durch die Verwendung von Greifern, welche durch Tastglieder die Verbindung mit den geleerten Magazingefachen aufrecht erhalten und das Dia unabhängig von der
Magazinbewegung wieder in das Gefach zurückführen, eine wesentliche Vereinfachung dadurch erreicht, daß nur ein Schaltnocken eines Kurvenrades erforderlich ist, weil je vollständigem Zyklus nur ein Magazinschaltschritt erfolgt. Die dadurch erreichte erhebliche Vereinfachung des Triebwerks, insbesondere die völlige Eliminierung des Pilgerschrittantriebs,
hat noch zur Folge, daß die Umschaltung von Vorwärts- auf
Rückwärtsprojektion (Vorwärts- oder Rückwärtstransport des
Magazins) durch einfaches Umkehren der Drehrichtung des Antriebsmotors bzw. des Handantriebs bewirkt werden kann.

Auf den Zeichnungen ist der Erfindungsgegenstand in zwei Ausführungsbeispielen dargestellt und zwar zeigt

Figur 1 einen senkrechten Längsschnitt entlang der optischen Achse des Beleuchtungssystems.

Figur 2 den zugehörigen Grundriß

Figur 3 einen entsprechenden Grundriß des Triebwerks

Figur 4 eine schaubildliche Darstellung des Wechselgreifers

Figur 5 eine schaubildliche Gesamtansicht einer Ausführungsform des Bildwerfergehäuses und

Figur 6 eine weitere Ausführungsform in gleichartiger Darstellung.

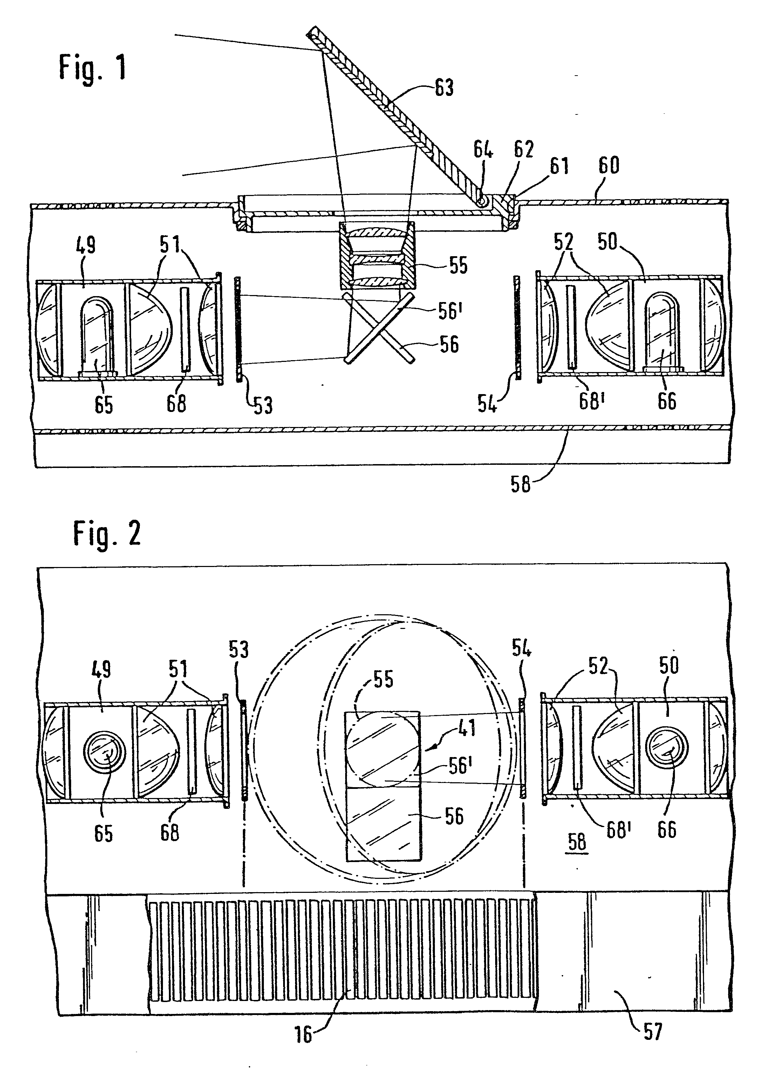

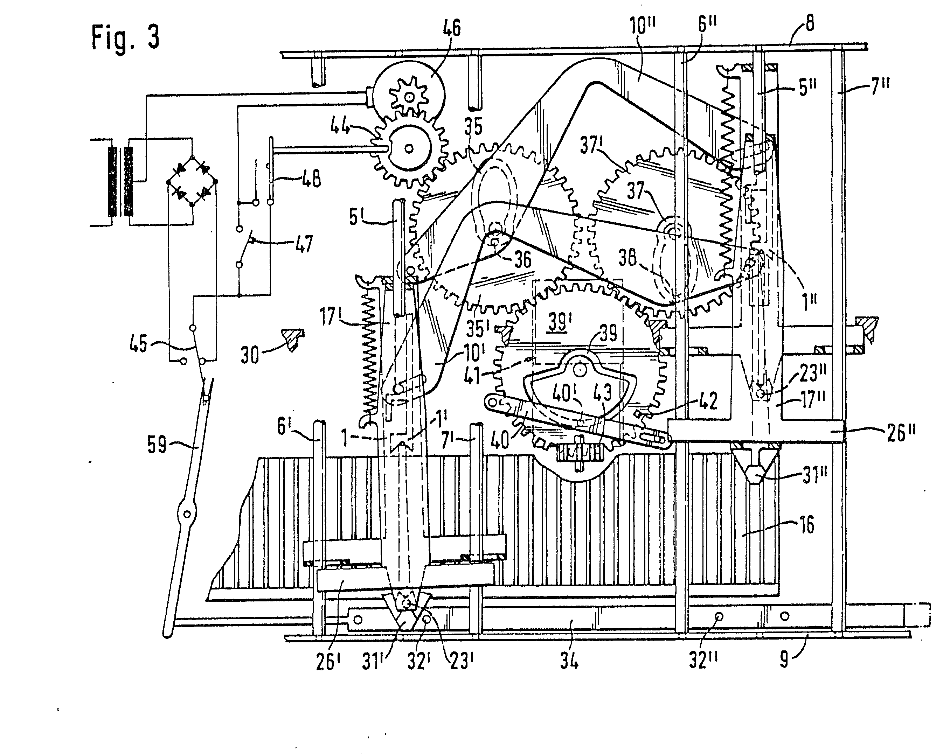

In den Figuren 1 und 2 sind im wesentlichen die optischen Teile des Bildwerfers dargestellt, und zwar in Figur 1 im Aufriß (Längsschnitt) und in Figur 2 im Grundriß. Der Übersichtlichkeit halber sind in Figur 2 die mechanischen Teile des Bildwerfergetriebes fortgelassen und in Figur 3 gesondert dargestellt. Die Teile der Figur 2 sind also der Figur 3 überlagert zu verstehen. Diese Aufteilung erfolgte aus Gründen der Übersichtlichkeit.

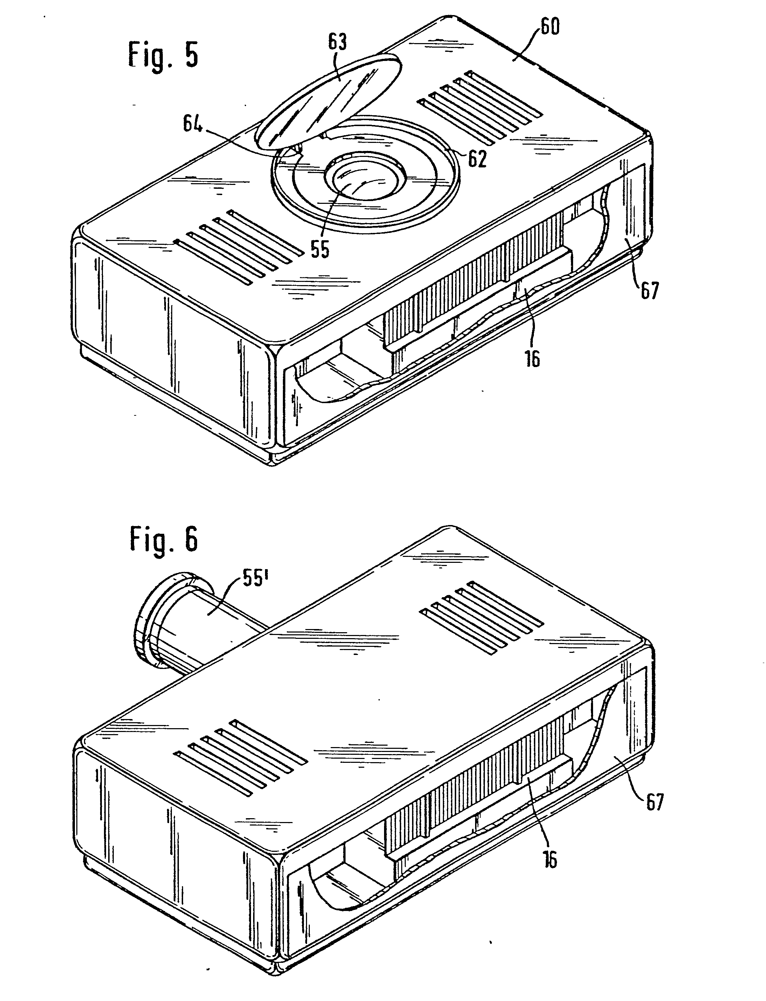

Auf dem Boden bzw. der Grundplatte 58 des Bildwerfers sind zwei vollständige Beleuchtungssysteme 49, 51 bzw. 50, 52 montiert sowie die beiden Bildfensterführungen 53 und 54. Alle diese Teile sind gleichachsig gegeneinander gerichtet, so daß sich die beiden Bildfensterführungen 53 und 54 gegenüberliegen. Der Abstand der Bildfensterführungen ist dabei gleich der halben Magazinlänge des zugehörigen Magazins gewählt bzw. umgekehrt wird ein Magazin verwendet, dessen Länge dem doppelten Abstand der Bildfensterführungen 53 und 54 entspricht. In der Mitte zwischen den beiden Bildfensterführungen befinden sich

./

0022909

die gekreuzten Ablenkspiegel 56, die gemeinsam senkrecht
zur optischen Achse bzw. senkrecht zur Bildebene der Figur
1 verschiebbar sind, um abwechselnd das eine oder das andere Dia senkrecht zur optischen Achse abzuspiegeln in das gemeinsame
Objektiv 55. Dieser Ablenkspiegel 56 ist auch in Figur 3
enthalten und dort als Überblendspiegel 41 gekennzeichnet.
Auf der Grundplatte 58 ist noch die Magazinführung 57 für
das Magazin 16 angeordnet und zwar derart, daß die Diamittelachse parallel und in gleicher Höhe zu der Achse der
Beleuchtungssysteme verläuft. Der Projektionsstrahlengang
erfolgt bei dieser Anordnung des Objektivs senkrecht nach
oben durch die Öffnung 61 des Bildwerfergehäuses. Diese
Öffnung 61 enthält eine drehbare Ringfassung 62, an welcher
ein Spiegel 63 mittels eines Scharniers 64 angelenkt ist,
so daß der Bildwerferstrahlengang parallel zur optischen
Achse der Beleuchtungssysteme bzw. in horizontaler Richtung
abgelenkt werden kann, wobei durch Drehen des Spiegels 63
in der Ringfassung 62 in beliebiger Richtung horizontal abgestrahlt werden kann. Der Spiegel 63 ist zweckmäßig als
Abdeckklappe ausgebildet, so daß das Projektorgehäuse durch
Herunterklappen des Spiegels 63 verschlossen werden kann.
Wenn der Spiegel 63 gemäß Figur 5 so gedreht ist, daß die
Abstrahlung horizontal nach der Magazinseite zu erfolgt,
dann kann der Bildwerfer von der Magazinseite aus bedient
werden, so daß es beispielsweise in ein Schrankgefach eingesetzt werden kann und zum Auswechseln des Magazins und zur
sonstigen Bedienung nicht herausgenommen zu werden braucht.
Eine vereinfachte Form eines Bildwerfers ergibt sich gemäß
Figur 6, wenn die Ablenkspiegel 56 um 90° in der optischen
Achse gedreht angeordnet werden. In diesem Falle kann das
Objektiv in der dem Magazin entgegengesetzten Seitenwand
angebracht werden, so daß sich eine besonders flache Bildwerfergehäuseform ergibt, die allerdings nicht, wie die vorbeschriebene Ausführungsform, einen Magazinwechsel gestattet,
wenn der Bildwerfer in einen Schrankgefach oder dergleichen
untergebracht ist, ohne den Bildwerfer aus diesem Gefach herauszunehmen.

Ein Stabmagazin in dem die Dias zur Hälfte in ungerader und zur anderen Hälfte in gerader Zahlenfolge eingeordnet sind erfordert für den vollständigen Durchlauf nur einen Schaltweg von der halben Magazinlänge. Da die Bildfensterführungen um die halbe Magazinlänge voneinander entfernt sind, ist für die Gesamtbewegung des Magazins eine Länge von dem 1 1/2-fachen der Magazinlänge erforderlich. Steht diese Länge zur Verfügung, wie beispielsweise bei den Ausführungen gemäß Figuren 5 und 6, dann tritt das Magazin in den Endstellungen nicht mehr aus der Gehäuseseite hervor, so daß es also in jeder Stellung innerhalb des Bildwerfergehäuses verbleibt. Damit bietet sich die Möglichkeit an, den Magazinwechsel durch seitliches Herausnehmen und Einsetzen in den Magazinraum des Gehäuses durchzuführen. Die offene Magazinlängswand kann durch einen Klappdeckel 67 verschließbar sein, so daß der Magazinraum betriebsmäßig und außerbetriebsmäßig dicht verschlossen werden kann. (Figur 5). Die Baulänge des Bildwerfers wird einmal von dem Abstand der beiden Bildfensterführungen 53 und 54 und zum übrigen von der Baulänge der Beleuchtungssysteme 49, 51 bzw. 50, 52 bestimmt, dergestalt, daß die Baulänge der beiden Beleuchtungssysteme 65, 49, 51, 68 bzw. 66, 52, 50, 68' zusammen mindestens die Magazinlänge erreichen muß. Praktisch wird das nur dann nicht der Fall sein, wenn extrem lange Magazine verwendet werden sollen und dementsprechend der Abstand der Bildfenster 53, 54 wesentlich größer gewählt wird als die Länge der Beleuchtungssysteme beträgt. In diesem Falle muß dann entweder das Bildwerfergehäuse entsprechend länger ausgebildet werden, wenn nicht auf die Vorteile der geschlossenen Magazinführung und des Verschlußdeckels 67 verzichtet werden soll und Vorsorge getroffen wird, daß das Magazin in beiden Enden der Magazinführung aus dem Gehäuse heraustreten kann. Durch die erfindungsgemäße Anordnung der Beleuchtungssysteme ergibt sich die Möglichkeit, in den Zwischenraum zwischen den Bildfensterführungen 53 und 54 den beweglichen Überblendspiegel 56
und das gesamte in einem Aggregat zusammengefaßte Schaltgetriebe einschließlich des Überblendspiegelantriebs unterzubringen. Das Triebwerk besteht im wesentlichen aus den beiden Kurbelschleifen 35 und 37, welche auf Zahnrädern 35' und
37' angeordnet sind, symmetrisch ausgebildet und um 180°
gegeneinander versetzt sind. Diese Kurbelschleifen betätigen über Führungsrollen 36 und 38 die Kurbelstangen 10'' und
10' für die Bildfensterwechselgreifer 1'' und 1'. Eine
weitere Kurbelschleife 39 auf dem Zahnrad 39' betätigt über
eine Rolle 40' den Hebel 40, der seinerseits den Überblendspiegel betätigt, d.h. die beiden gekreuzten Spiegelhälften
abwechselnd in den Strahlengang bringt. An dem Zahnrad 39'
sitzt noch ein Nocken 42, welcher mit dem Ritzel 43 der
Magazinfortschaltung zusammenwirkt und zwar in der Weise,
daß bei jedem Durchlauf das Ritzel um einen Magazinschaltschritt weitergeschaltet wird. Alle drei Zahnräder 35', 37',
39' kämmen miteinander und haben gleichen Durchmesser, so
daß sie gemeinsam volle Umdrehungen ausführen. Durch die
zu den Achsen konzentrischen Abschnitte der Kurbelschleifen werden Stillstandszeiten von nahezu 180° erreicht, bei
der Kurbelschleife für die Spiegelbewegung zwei Stillstandszeiten von je etwa 150°. Durch die starre Übersetzung
zwischen den Kurbelschleifen und deren völlig symmetrischer
Ausbildung wird erreicht, daß das Antriebswerk in der gleichen Weise vorwärts und rückwärts arbeitet. Der Antrieb
der Zahnräder 35', 37', 39' erfolgt über ein im Verhältnis 1:2 untersetztes Antriebsrad 44, welches auf eine
Umdrehung der Zahnräder zwei Umdrehungen ausführt und
mit einer Nockenscheibe zur Steuerung eines Haltekontaktes 48 für den Motorstromkreis versehen ist.
Der Haltekontakt 48 ist durch den Betätigungskontakt 47 überbrückt. Durch Betätigung dieses Kontaktes 47 wird also der
Motor 46 in Betrieb gesetzt und durch den Haltekontakt 48

./

in Betrieb gehalten, bis die Nockenscheibe 44 eine volle
Umdrehung, d.h. die Zahnräder 35', 37' und 39' eine halbe Umdrehung ausgeführt haben.

Die Möglichkeit mit nur einem einzigen Schaltschritt je
Zyklus, also je volle Umdrehung der Zahnräder 35', 37'
und 39' auszukommen bzw. mit einem einzigen Nocken 42
das Magazinschaltritzel 43 zu betätigen, anstelle einer
aufwendigeren Pilgerschrittschaltung, ergibt sich durch
die Anwendung von Greifern, welche durch Tastglieder
die Verbindung mit dem jeweils geleerten Magazingefach
aufrecht erhalten und das entnommene Dia unabhängig von
einer inzwischen erfolgten Magazinweiterbewegung wieder
in sein zugehöriges Gefach zurückführen.

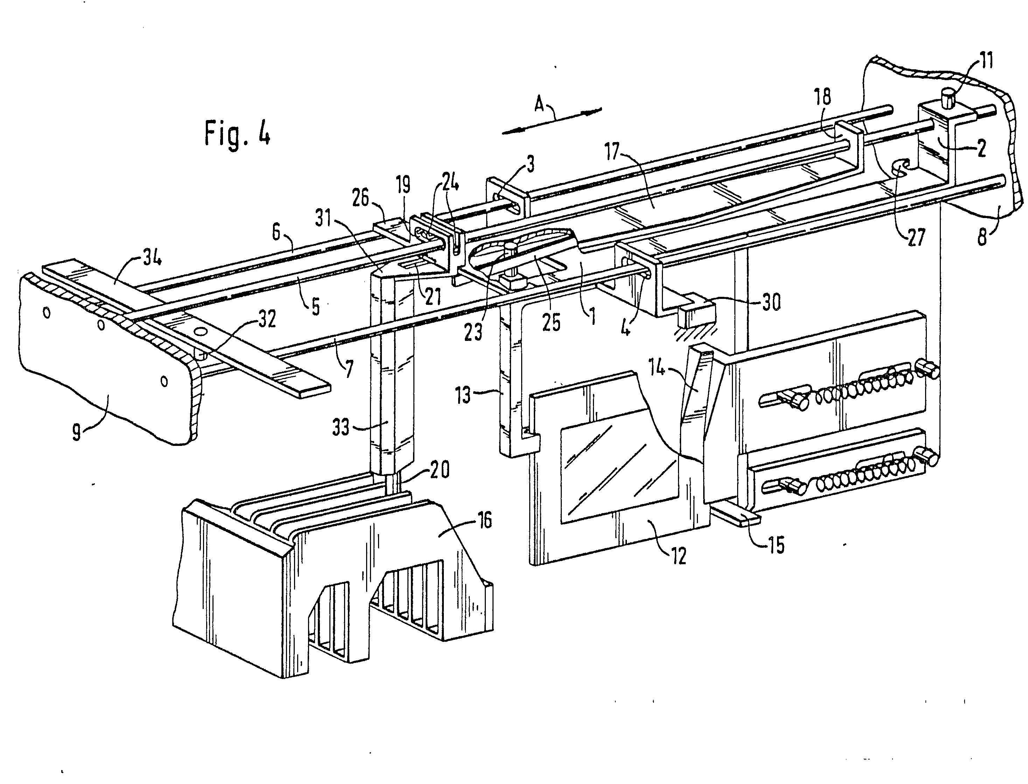

Ein solcher für diesen Zweck besonders geeigneter Mitwechselschieber nach der gleichzeitigen Patentanmeldung
P            (V 40/78 = A      ) ist in seinen wesentlichen Teilen in Figur 4 dargestellt.

Der Bildwechselschieber 1 ist mit der Nabe 2 und den Schlitzführungen 3, 4 auf den Führungsstangen 5, 6, 7, die zwischen
den Gehäusewänden 8 und 9 befestigt sind in Pfeilrichtung "A"
beweglich. Der Antrieb erfolgt durch die Kurbelstange 10 am
Zapfen 11. Die Schlitzführungen 3, 4 lassen eine begrenzte
Schwenkung des Schiebers 1 quer zur Längsrichtung um die Nabe
2 zu. Das Dia 12 wird zwischen dem Greiferarm 13 und der federnden Greiferbacke 14 gehalten. Diese besitzt einen Anschlag
15, welcher beim Rückführen des Dias 12 in das Magazin 16 an
dieses anstößt und dadurch das Dia 12 im Magazin 16 freigibt.
Insoweit ist dies eine gebräuchliche Anordnung. Ein zweiter
Schieber 17 ist mit der Nabe 18 am rechten Ende mit der Schlitzführung 19 am linken Ende auf der Führungsstange 5 geführt
und auf diese Weise ebenfalls begrenzt schwenkbar. Am linken
Ende des Schiebers 17 befindet sich ein Tastfinger 20, der
in die Magazingefache von oben hineinragt, und weiterhin eine
Längsnut 21 mit Abschrägungen 22 in der Höhe des Stiftes 23 des Wechselschiebers 1. Gleichfalls in der Höhe dieses
Stiftes 23 trägt der Schieber noch zwei parallele Federblätter 25 als Führung für den Stift 23, die bei paralleler
Stellung der Schieber 1 und 17 spannungslos ist. Die Schlitzführung 19 enthält zweckmäßig eine Wellenfeder 24 zur Kennzeichnung der drei Raststellungen der Schlitzführung 19 auf
der Führungsstange 5. Die Anschläge 30 haben die Aufgabe,
das Dia 12 in der Projektionsstellung senkrecht und parallel
zur Bildfensterebene zu fixieren. Das vordere Ende des Schiebers 17 läuft in einer Platte 26 aus, die auf den Führungen
6 und 7 aufliegt und damit Längs- und Querbewegungen des
Schiebers 17 zuläßt. Der Schieber 17 endet in einer keilförmigen Nase 31, die im Zusammenwirken mit einem Anschlagstift 32 den Schieber 17 in seine Grundstellung zurückführt,
wenn der Stiftfinger 20 bei Bewegung nach links den Magazinbereich verlassen hat. Zwischen den Haken 27 und 28 (nicht dargestellt) des Wechselschiebers 1 und des Schiebers 17 ist eine
Zugfeder 29 (in dieser Anmeldung nicht dargestellt) eingehängt,
derart, daß der Schieber 1 bei Bewegung nach rechts den Schieber 17 mitnimmt, bis die Stellung gemäß Abbildung erreicht ist,
in welcher die Federblätter 25 wirksam werden und das Dia in Projektionsstellung ist und der Tastfinger 20 das Magazin 16 nach
rechts noch nicht verlassen hat. Aus Sicherheitsgründen ist der
Tastfinger 20 oberhalb der Magazingefachkante um die Gefachwandstärke verdickt und mit Abweisschrägen 33 versehen, damit
das Einführen des Tastfingers 20 in die Magazingefache nicht
durch benachbarte Dias gestört werden kann. Der Anschlagstift
32 ist auf einem Schieber 34 quer zu den Führungen 5, 6, 7 am
Projektorgehäuse verstellbar, derart, daß nach Wahl die Nase 31
am Schieber 17 nach der einen oder anderen Seite abgelenkt werden
kann. Befindet sich, wie dargestellt, das Dia 12 in Projektionsstellung und der Tastfinger 20 im Magazinfach, aus dem das Dia
stammt, und wird nun das Magazin 16 in diesem Stadium um einen
Schritt weitergeschaltet, so nimmt es den Tastfinger 20 mit
und verschwenkt den Schieber 17 um seine Nase 18, wobei er
mit seiner Wellenfeder 24 auf der Führung 5 einrastet.

Dabei wird das Federpaar 25 einseitig gespannt. Es kann jedoch den Bildwechselschieber 1 über den Stift 23 nicht beeinflussen, weil dessen Lage durch die Anschläge 30 fixiert ist. Wenn nunmehr der Wechselschieber 1 durch die Kurbelstange 10 nach links bewegt wird, wird er aus den Anschlägen 30 ausgehoben, so daß die Federblätter 25 nunmehr den Schieber 1 am Stift 23 so verschwenken können, daß der Stift 23 bei Weiterbewegung des Schiebers 1 über die Abschrägungen 22 in die Nut 21 des Schiebers 17 gleiten kann. Damit sind die Schieber 1 und 17 starr miteinander gekuppelt, so daß der Greifer 13, 14 mit dem Dia 12 in das durch den Tastfinger bestimmte Magazingefach geleitet wird. Wenn das Dia die Ruhestellung im Magazin erreicht hat, stößt der Anschlag 15 der federnden Greiferbacke 14 an das Magazin an und gibt das Dia frei. Die Schieber 1 und 17 werden weitergeschoben, bis der Tastfinger 20 das Magazin voll durchquert hat, die keilförmige Greifernase 31 auf den Anschlagstift 32 gestoßen ist und der Taststift 20 und Greifer 13, 14 vor das nächste Magazingefach verschwenkt hat.

Es wird also erreicht, daß ein Dia, welches dem Magazin entnommen und zwecks Projektion in das Bildfenster gebracht wurde, wieder direkt in sein ursprüngliches Gefach zurücktransportiert wird, unabhängig davon, ob das Magazin, aus welchem Grunde auch immer, in der Zwischenzeit vorwärts- oder rückwärts weitergeschaltet wurde. Damit ergibt sich bei dem vorliegenden Bildwerfer die Möglichkeit, mit einem einzigen Schaltschritt je vollständigen Wechselzyklus (voller Umlauf der Kurbelschleifenräder) auszukommen.

Hierdurch und durch die vollkommen symmetrische Ausbildung der Kurbelschleifen ergibt sich die Möglichkeit, durch einfaches Umpolen des Antriebsmotors den Bildwerfer von Vorwärts- auf Rückwärtslauf bzw. von Vorwärts- auf Rückwärtsdiawechsel umzuschalten.

0022909

ROLLEI - WERKE
Franke & Heidecke
Braunschweig

13.05.1980
A 1162 EU

1. Überblend-Stehbildwerfer für Stabmagazine, in denen
   die Dias zur Hälfte in ungerader und zur anderen
   Hälfte in gerader Zahlenfolge eingeordnet sind,
   d a d u r c h   g e k e n n z e i c h n e t,
   daß die beiden vollständigen Beleuchtungssysteme
   (49, 51, 65 und 50, 52, 66) und die Bildfensterführungen (54) gleichachsig gegeneinandergerichtet,
   zur Magazinschaltrichtung parallel und mit den Bildfensterführungen um die halbe Magazinlänge voneinander entfernt angeordnet sind, und daß in diesem
   Zwischenraum der bewegliche Überblendspiegel (56)
   zur alternierenden Ablenkung der Bildstrahlengänge
   senkrecht zur Achse der Beleuchtungssysteme in das
   gemeinsame Objektiv (55) und das gesamte in einem
   Aggregat zusammengefaßte Schaltgetriebe einschließlich des Überblendspiegelantriebs untergebracht sind.

2. Überblend-Stehbildwerfer nach Anspruch 1,
   d a d u r c h   g e k e n n z e i c h n e t,
   daß das Schaltgetriebe für den Greiferantrieb und
   den Überblendspiegelantrieb mit dem Überblendspiegel
   zu einem Aggregat zusammengefaßt ist.

/

3. Überblend-Stehbildwerfer nach Anspruch 1 oder 2,
   g e k e n n z e i c h n e t   d u r c h
   einen an der Objektivstrahlenaustrittsöffnung (61)
   des Bildwerfergehäuses (60) angeordneten Umlenkspiegel (63) für den Projektionsstrahlengang.

4. Überblend-Stehbildwerfer nach Anspruch 3,
   d a d u r c h   g e k e n n z e i c h n e t ,
   daß der Spiegel (63) schwenkbar und drehbar am Gehäuse (60) gelagert ist und als Verschlußklappe
   für die Objektivstrahlenaustrittsöffnung ausgebildet ist.

5. Überblend-Stehbildwerfer nach einem der Ansprüche 1 bis 4,
   g e k e n n z e i c h n e t   d u r c h
   starr oder gleichlaufend miteinander verbundene Nutkurvenschleifen (35, 37, 39) für den Antrieb der beiden Wechselgreifer (13, 13') und des Überblendspiegels
   (41), wobei jeder Nutkurve (35, 37, 39) die Steuerung
   des vollständigen Bewegungszyklus des zugehörigen Antriebsteils bei einer vollen Umdrehung zugeordnet ist,
   wobei die beiden Greiferantriebskurven (35, 37) um
   180° gegeneinander versetzt sind und die Stillstandszonen der Kurven, nämlich die zur Welle konzentrischen
   Kurvenabschnitte sich über etwa eine halbe Umdrehung
   erstrecken.

6. Überblend-Stehbildwerfer nach Anspruch 5,
   d a d u r c h   g e k e n n z e i c h n e t ,
   daß die Nutkurven (35, 37, 39) auf gesonderten Zahnrädern (35', 37', 39') angebracht sind.

7. Überblend-Stehbildwerfer nach Anspruch 6,
   d a d u r c h   g e k e n n z e i c h n e t ,
   daß ein Zahnrad   (39') einen Nocken (42) enthält,

.../

in dessen Weg Mitnehmeransätze des Magazinantriebsritzels (43) für die Magazinfortschaltung liegen.

8. Überblend-Stehbildwerfer nach Anspruch 7,
   g e k e n n z e i c h n e t   d u r c h
   einen einzigen Nocken (42) am Zahnrad
   (39') in Verbindung mit Greifern, welche durch Tastglieder (20) die Verbindung mit dem jeweils geleerten
   Magazingefach aufrecht erhalten und das Dia (12) unabhängig von der Magazinbewegung wieder in dieses Gefach
   zurückführen.

9. Überblend-Stehbildwerfer nach einem der Ansprüche 5 bis 8,
   d a d u r c h   g e k e n n z e i c h n e t ,
   daß der Antrieb des Getriebes über ein untersetztes
   Zwischenrad (44) bewirkt wird, welches auf eine Umdrehung der Zahnräder   (35', 37', 39') zwei Umdrehungen ausführt und welches mit einer Nockenscheibe zur
   Steuerung eines Haltekontaktes (48) für den Motorstromkreis verbunden ist, welcher den Stromkreis in der Projektionsstellung der Greifer bzw. Dia in ansich bekannter Weise öffnet.

/

Fig. 1

Fig. 2

Fig. 3

Fig. 4

Fig. 5

Fig. 6

## EUROPÄISCHER RECHERCHENBERICHT

Europäisches
Patentamt

Nummer der Anmeldung
EP 80 10 2779

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 194 115 (H.L. GIWOSKY) <br> * Spalte 4, Zeilen 50-75; Spalten 5-12; Figuren 1-59 * <br> -- | 1,7 |
| | US - A - 3 765 756 (D. McCORMACK PETERSON) <br> * Spalten 11-15; Figuren 10,14 * <br> -- | 1 |
| | FR - A - 1 591 846 (J. GARDIN) <br> * Seite 1; Figuren 1,2 * <br> -- | 1 |
| | FR - A - 2 396 987 (DRWIRGA B.) <br> * Seite 3, Zeilen 31-37; Figur 5 * <br> -- | 3 |
| A | DE - A - 2 710 884 (ROLLEI-WERKE) <br> * Seiten 13-16; Figuren 1-5 * <br> ---- | 5 |

**KLASSIFIKATION DER ANMELDUNG (Int. Cl.³)**

G 03 B 23/16

**RECHERCHIERTE SACHGEBIETE (Int. Cl.³)**

G 03 B 23/16
23/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-10-1980 | BOEYKENS |

EPA form 1503.1 06.78